# FASCICULE DE BREVET EUROPEEN

(11) **EP 1 519 009 B1**
(45) Date de publication et mention de la délivrance du brevet: **24.05.2006**
(21) Numéro de dépôt: 04292257.5
(22) Date de dépôt: 21.09.2004
(51) Int. Cl.: F01D 9/06, F01D 25/24

(54) **Turboréacteur avec prélèvement d'air de cabine par tube à double rotule**
Turbomaschine mit Luftentnahme für die Kabine über ein Kugelgelenkrohr
Turbomachine with cabin bleed air through a tube with ball joint

(30) Priorité: 22.09.2003 FR 0311064
(43) Date de publication de la demande: 30.03.2005
(73) Titulaire: SNECMA, 75015 Paris (FR)
(72) Inventeur: Lepetre, Gilles, 91860 Epinay-sous-Senart (FR)
(74) Mandataire: Barbin le Bourhis, Joel

(56) Documents cités:
- EP-A- 0 162 340
- EP-A- 1 247 944
- US-A- 4 870 826

## Description

L'invention se rapporte à un turboréacteur comportant d'amont en aval, l'amont et l'aval étant définis par le sens de la circulation du flux primaire, un compresseur à haute pression, une grille de diffuseur et une chambre de combustion, ledit compresseur à haute pression comportant une virole externe délimitant radialement la veine dudit flux primaire et raccordée à une structure annulaire qui s'étend radialement vers l'extérieur, ladite grille de diffuseur comportant dans le prolongement axial de ladite virole externe de compresseur un carter externe raccordé à un jambage conique orienté vers l'arrière et délimitant en amont le fond de ladite chambre de combustion, ledit jambage étant lui-même raccordé à une virole externe de carter qui s'étend vers l'amont et est fixée à ladite structure annulaire par des moyens de fixation, ledit jambage, ladite virole externe de carter et ladite structure annulaire définissant une cavité autour de ladite grille de diffuseur, des orifices de prélèvement d'air étant ménagés dans ledit jambage pour mettre en communication le fond de chambre avec ladite cavité, et ladite virole externe de carter étant équipée de bouches de sortie de l'air prélevé.

Le prélèvement d'air nécessaire à la cabine de l'avion équipé d'au moins un turboréacteur est effectué en fond de chambre de combustion dans une zone où il perturbe le moins le rendement global du moteur. Le prélèvement s'effectue par les orifices du jambage, ce qui permet une implantation aisée des bouches de sortie de l'air prélevé. Cette disposition impose une étanchéité relative entre la veine du compresseur à haute pression et la cavité située au-dessus de la grille du diffuseur.

Cette étanchéité est d'autant plus difficile à réaliser que les déplacements relatifs entre la grille de diffuseur et la virole externe du compresseur sont de l'ordre de 1,5 mm dans la direction axiale et sensiblement du même ordre en radial, du fait des réponses thermiques et mécaniques des différentes pièces dans un environnement soumis à de fortes pressions pouvant atteindre 30 bars et à des températures élevées pouvant atteindre 650°C.

La technologie actuelle retenue pour assurer l'étanchéité entre le compresseur et le carter externe de la grille est du type joint à lamelle et contre-joint appuyés par des ressorts. Cette technologie permet en effet un déplacement suffisamment ample entre les deux pièces.

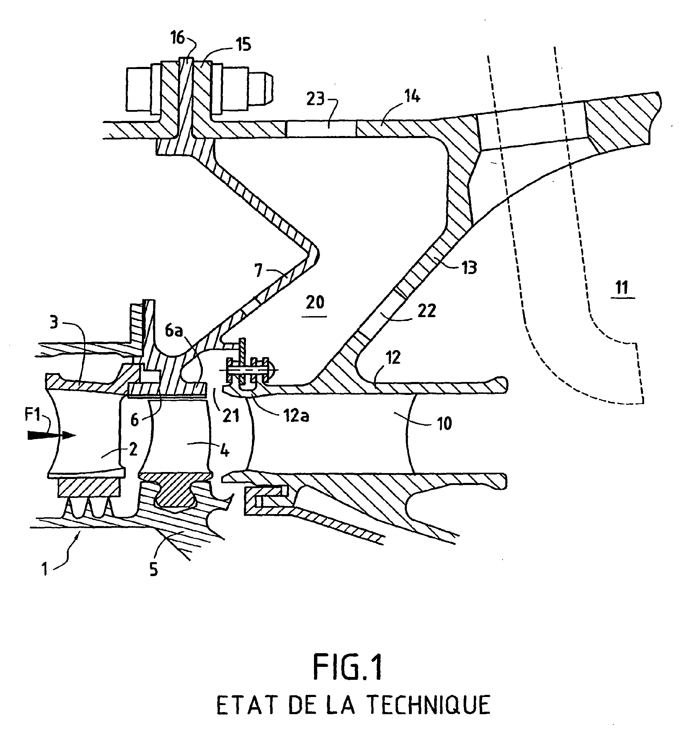

L'état de la technique est illustré par la figure 1 qui montre le dernier étage d'un compresseur à haute pression 1 d'un turboréacteur présentant, d'amont en aval dans le sens du flux primaire F1, une couronne d'aubes fixes 2 qui s'étendent radialement vers l'intérieur à partir d'un carter externe 3, suivie d'une couronne d'aubes mobiles 4 montées à la périphérie d'une roue de compresseur 5 et s'étendant vers l'extérieur jusqu'à une virole externe 6 de compresseur délimitant radialement avec le carter externe 3 la veine du flux primaire, cette virole externe 6 étant raccordée à une structure annulaire 7, ayant une section en V dans le plan contenant l'axe du turboréacteur, et s'étendant radialement vers l'extérieur et qui est fixée au carter externe du moteur par boulonnage.

En aval du compresseur 1 est prévue une grille de diffuseur 10 qui reçoit de l'air comprimé du compresseur 1 et la délivre vers une chambre de combustion 11. La grille 10 présente dans le prolongement axial de la virole externe 6 du compresseur 1 un carter externe 12 raccordé à un jambage conique 13 orienté vers l'arrière du turboréacteur, ce jambage 13 définit la paroi amont du fond de la chambre de combustion 11 et il est raccordé dan sa région radialement extérieure à une virole externe 14 de carter qui s'étend vers l'amont, et qui présente une bride amont 15 servant à la fixation par boulonnage de l'ensemble constitué par la chambre de combustion et le diffuseur sur une bride 16 radialement extérieure de la structure annulaire 7.

Une cavité 20, entourant la grille de diffuseur 10 est ainsi délimitée axialement par la structure annulaire 7 et le jambage 13, radialement à l'extérieur par la virole externe 14 de carter et radialement à l'intérieur par la portion aval 6a de la virole externe 6 de compresseur et par la portion amont 12a du carter externe 12, un interstice 21 séparant ces deux portions.

Le jambage 13 présente des orifices 22 de prélèvement d'air en fond de chambre et la virole externe 14 de carter est équipée de bouches de sortie 23 pour fournir un débit d'air pour l'aération de la cabine de l'avion ou pour le refroidissement d'autres éléments du turboréacteur.

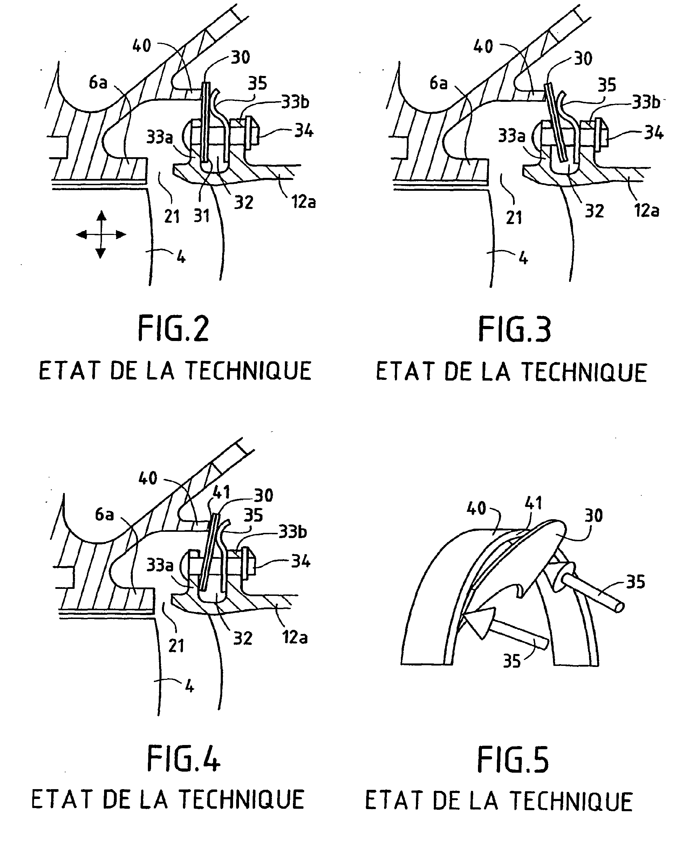

L'étanchéité entre la veine de compresseur et la cavité 20 est assurée, ainsi que cela est montré en détail sur la figure 2, par un joint sectorisé à lamelles 30 doublées de contrejoints 31, monté sur le pourtour de la portion amont 12a du carter externe 12 de la grille de diffuseur. A cet effet, cette portion aval 12a présente sur son pourtour une gorge 32 délimitée par deux brides, référencées 33a en amont et 33b en aval, qui comportent des perçages pour la fixation de rivets 34. Les lamelles 30 et les contrejoints 31 sont maintenus en appui sur la face aval de la bride amont 33a par des ressorts 35, et sont retenus par les rivets 34. Les ressorts 35 sont également retenus par les rivets 34. La portion radialement interne de la structure annulaire 7 présente un becquet annulaire 40 qui s'étend axialement dans la cavité 20 et dont l'extrémité se trouve au-dessus de la bride amont 33a en l'absence de déplacement axial entre la virole externe 6 du compresseur 1 et le carter externe 12 du diffuseur, comme cela est montré sur la figure 2.

Les ressorts 35 appuient sur les joints dans la zone annulaire séparant le becquet 40 de la bride amont 33a. D'autre part la pression de l'air est légèrement supérieure dans la cavité 20 par rapport à la pression dans la veine au niveau de l'interstice 21.

Les appuis des joints 30 côté becquet 40 et côté bride amont 33a comportent des surfaces convexes. Les efforts conjugués des ressorts 35 et de l'écart des pressions sur les deux faces des joints 30 appliquent les lamelles 30, qui sont planes, sur ces surfaces dans la configuration montrée sur la figure 2, ce qui assure l'étanchéité.

Dans certaines phase de vol, l'appui entre les lamelles 30 et le becquet 40 laisse un jeu de fuite, notamment lorsque le becquet 40 passe au-dessus de la gorge 32, comme cela est montré sur les figures 4 et 5. Entre deux ressorts consécutifs, les lamelles 30 s'écartent du becquet et seule la différence de pression entre les deux faces qui est faible peut empêcher la création de cet écartement. Il se produit alors un jeu de fuite 41 entre les lamelles et l'extrémité du becquet 40.

Lorsqu'au contraire la grille de diffuseur 10 s'éloigne du compresseur 1, comme cela est visible sur la figure 3, l'effort dû à l'écart de pression et l'effort des ressorts 35 permettent une étanchéité correcte, par déformation des lamelles 30.

Les doubles flèches montrées sur la figure 2 indiquent les déplacements relatifs axial et radial entre l'extrémité aval de la virole externe 6 de compresseur et l'extrémité amont du carter externe 12 de la grille de diffuseur 10.

Il est à noter en outre que la disposition de cette étanchéité portée par le carter externe 12 permet le montage de l'ensemble chambre de combustion et diffuseur, sur le compresseur par déplacement axial relatif dudit ensemble par rapport au compresseur, puis par boulonnage des brides externes 15 et 16

En outre, US 4870826 montre le prélèvement d'air effectué en fond d'une cavité entourant la grille du diffuseur en aval du dernier étage d'un compresseur à haute pression et en amont d'une chambre de combustion. La cavité est définie par un jambage conique lui-même étant raccordé à une virole, externe du carter et des orifices de prélèvement d'air étant aménagés dans ledit jambage.

Le but de l'invention est de proposer un cheminement de l'air prélevé dans le fond de chambre entre l'orifice du jambage et la bouche de sortie, qui permette de s'affranchir de la nécessité de rendre étanche la région radialement intérieure de la cavité entourant la grille du diffuseur.

L'invention atteint sont but par le fait qu'il est prévu, entre l'orifice du jambage et la couche de sortie, un tube dont une première extrémité est montée dans la bouche de sortie par une liaison rotulante libre en rotation et bloquée en translation et dont une deuxième extrémité est montée dans l'orifice du jambage par une liaison rotulante libre en rotation et en translation.

La circulation de l'air dans ce tube est ainsi indépendante des variations de pression dans la cavité séparant le stator du compresseur du diffuseur. Elle n'est influencée que par la pression régnant dans le fond de chambre dans la zone de prélèvement.

La première et la deuxième extrémité du tube comportent chacune à leur périphérie une portion de surface sphérique.

L'orifice du jambage est formé par un alésage cylindrique dont le diamètre est sensiblement égal au diamètre de la portion de surface sphérique de la deuxième extrémité du tube.

La bouche de sortie comporte un orifice ménagé dans la paroi de la virole externe du carter, ledit orifice étant délimité par une portion cylindrique située du côté de la face externe de ladite virole externe et par une portion de surface sphérique située du côté de la face interne et raccordée à la portion de surface cylindrique, lesdites portions de surface cylindrique et sphérique ayant un diamètre sensiblement égal au diamètre de la portion de surface sphérique de la première extrémité de tube.

D'autres avantages et caractéristiques de l'invention ressortiront à la lecture de la description suivante faite à titre d'exemple et en référence aux dessins annexés dans lesquels :
les figures 1 à 5 montrent l'état de la technique :
   la figure 1 étant une demi-coupe, selon un plan contenant l'axe du turboréacteur, de la partie aval d'un compresseur et du diffuseur, qui montre l'implantation de la cavité communiquant avec le fond de la chambre et dans lequel on prélève l'air pour la cabine de l'avion, et l'installation du joint d'étanchéité, selon l'état de la technique, entre cette cavité et la veine du flux primaire ;
   la figure 2 montre à plus grande échelle la disposition du joint d'étanchéité selon l'état de la technique ;
   la figure 3 montre la déformation du joint en cas d'augmentation de l'interstice entre la virole externe du compresseur et le carter externe de la grille du diffuseur ;
   la figure 4 montre la déformation de ce même joint en cas de diminution de cet interstice ; et
   la figure 5 est une vue en perspective du joint d'étanchéité en cas de diminution de l'interstice qui montre le jeu de fuite ; et
   la figure 6 montre le système de prélèvement d'air à la cabine selon l'invention.

Les figures 1 à 5 ont déjà été commentés et ne nécessitent pas d'autres explications.

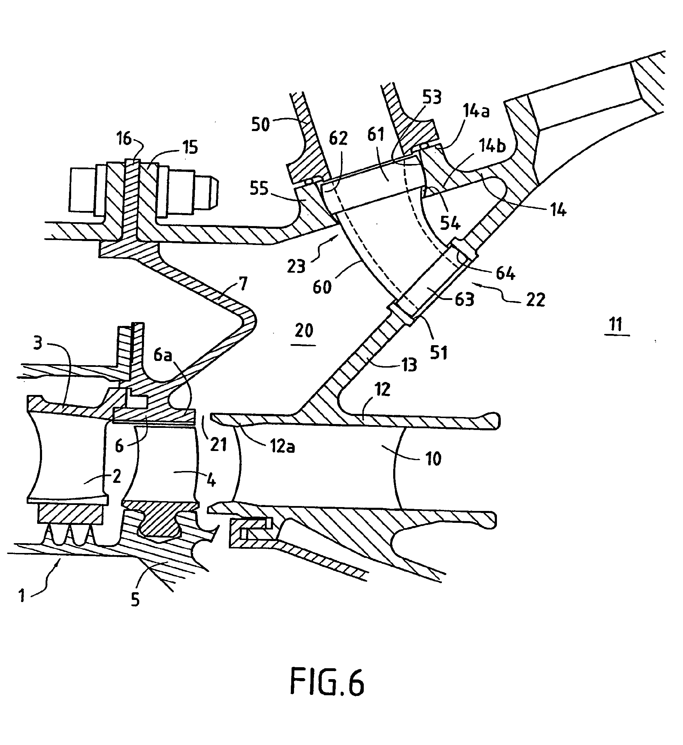

La figure 6 montre la partie aval d'un compresseur de turboréacteur dont le stator présente une virole externe 6 délimitant extérieurement la veine du flux primaire, qui se raccorde à une structure annulaire 7, de section en V, présentant à sa périphérie une bride 16, et une grille 10 diffuseur ayant un carter externe 12 dans le prolongement de la virole externe 6 et dont la partie amont 12a délimite un interstice 21 avec l'extrémité aval 6a de la virole externe 6 du compresseur.

Le carter externe 12 de la grille 10 se raccorde à un jambage 13 oblique qui se raccorde lui-même à une virole externe 14 de carter, qui s'étend vers l'amont et présente à son extrémité amont une bride 15. La bride 15 et la bride 16 sont fixées entre elles par boulonnage.

Le jambage 13 présente au moins un orifice traversant 22 formé par une paroi cylindrique 51. L'orifice 22 sert à prélever de l'air dans le fond de la chambre de combustion notamment pour la ventilation de la cabine de l'avion.

La virole externe 14 de carter comporte également un orifice 23, ou bouche de sortie de l'air alimentant à l'entrée d'un conduit 50 d'alimentation d'un dispositif d'aération de la cabine non montré sur le dessin.

Les axes de l'orifice 23 de la virole externe 14 de carter et de l'orifice 22 du jambage 13 sont disposés dans un même plan méridien contenant l'axe du turboréacteur.

L'orifice 23 est délimité du côté de la face externe 14a de la virole externe 14 par une portion de surface cylindrique 53 et du côté de la face interne 14b de la virole externe 14 par une portion de surface sphérique 54, ces deux portions de paroi se raccordant dans le plan médian de la paroi de la virole externe 14 de carter qui présente un bossage 55 autour de l'orifice 23.

Un tube 60, traversant la cavité 20 relie l'orifice 22 du jambage 13 à l'entrée du conduit 50.

Ce tube 60 comporte une première extrémité 61 disposée dans l'orifice 23 de la virole externe 14 qui présente à sa périphérie une portion 62 de surface sphérique dont le diamètre est égal ou sensiblement égal au diamètre des portions de surface cylindrique 53 et sphérique 54 délimitant l'orifice 23.

La longueur du tube 60 est calculée de telle manière que sa deuxième extrémité 63 soit disposée dans l'orifice cylindrique 22 du jambage 13. Cette deuxième extrémité 63 présente à sa périphérie une portion de surface sphérique 64 dont le diamètre est égal ou sensiblement égal au diamètre de l'orifice cylindrique 22.

La liaison entre le tube 60 et le jambage 13 est ainsi une liaison rotulante qui permet une liberté de l'extrémité 63 en translation dans le sens de l'axe de l'orifice 22 et une liberté en rotation autour du centre de la portion de surface sphérique 64.

La face frontale de la première extrémité 61 du tube 60 est située à faible distance de la face d'extrémité du conduit 50, ce qui empêche la première extrémité 61 du tube 60 de se déplacer en translation et autorise un degré de liberté de la première extrémité autour du centre de la portion de surface sphérique 62. Il est à noter que l'embouchure du conduit 50 pourrait comporter une portée sphérique venant en appui sur la portion de sphérique 62.

La liaison entre le tube 60 et la virole externe 14 du carter est ainsi réalisée sous la forme d'une rotule floquée en translation mais libre en rotation.

Le diamètre de l'orifice 23 est supérieur au diamètre de l'orifice 22, afin de faciliter le montage du tube 60. La deuxième extrémité 63 du tube 60 est introduite dans l'orifice 23 de la virole externe 14 de carter par la face externe 14a.

Lorsque la deuxième extrémité 63 loge dans l'orifice 22 du jambage, la portion de surface sphérique 62 de la première extrémité 61 est en butée contre la portion de surface sphérique 54 de l'orifice 23. La mise en place du conduit 50 immobilisera la première extrémité 61 en translation par rapport à l'axe de l'orifice 23.

Le tube 60 est réalisé en un matériau qui a un coefficient de dilatation sensiblement identique au matériau constitutif du diffuseur et notamment du jambage 13 et de la virole externe 14 de carter. Ce matériau peut notamment être identique à celui du diffuseur, ce qui permet de s'affranchir des problèmes de gradient de température.

Les surfaces sphériques et cylindriques des liaisons rotulantes peuvent être traitées avec un produit protégeant les éléments en contact et améliorant les glissements relatifs. Ces surfaces peuvent notamment être traitées avec un vernis céramique au graphite.

## Revendications

1. Turboréacteur comportant d'amont en aval, l'amont et l'aval étant définis par le sens de la circulation du flux primaire, un compresseur (1) à haute pression, une grille de diffuseur (10) et une chambre de combustion, ledit compresseur à haute pression comportant une virole externe (6) délimitant radialement la veine dudit flux primaire et raccordée à une structure annulaire (7) qui s'étend radialement vers l'extérieur, ladite grille de diffuseur comportant dans le prolongement axial de ladite virole externe (6) de compresseur un carter externe (12) raccordé à un jambage (13) conique orienté vers l'arrière et délimitant en amont le fond de ladite chambre de combustion, ledit jambage étant lui-même raccordé à une virole externe de carter (14) qui s'étend vers l'amont et est fixée à ladite structure annulaire (7) par des moyens de fixation, ledit jambage, ladite virole externe de carter et ladite structure annulaire définissant une cavité (20) autour de ladite grille (10) de diffuseur, des orifices (22) de prélèvement d'air étant ménagés dans ledit jambage (13) pour mettre en communication le fond de chambre avec ladite cavité (20), et ladite virole externe de carter étant équipée de bouches de prélèvement d'air (23), **caractérisé par le fait qu'**il est prévu entre l'orifice (22) du jambage (13) et la bouche de sortie (23), un tube (60) dont une première extrémité (61) est montée dans ladite bouche de sortie (23) par une liaison rotulante libre en rotation et bloquée en translation et dont une deuxième extrémité(63) est montée dans ledit orifice (22) par une liaison rotulante libre en rotation et en translation.

2. Turboréacteur selon la revendication 1, **caractérisé par le fait que** la première et la deuxième extrémités du tube comportent chacune à leur périphérie une portion de surface sphérique (62, 64).

3. Turboréacteur selon la revendication 2, **caractérisé par le fait que** l'orifice (22) du jambage (13) est formé par un alésage cylindrique (51) dont le diamètre est sensiblement égal au diamètre de la portion de surface sphérique (64) de la deuxième extrémité (63) de tube.

4. Turboréacteur selon l'une des revendications 1 ou 2, **caractérisé par le fait que** la bouche de sortie comporte un orifice (23) ménagé dans la paroi de la virole externe (14) de carter, ledit orifice étant délimité par une portion cylindrique (53) située du côté de la face externe (14a) de ladite virole et par une portion de surface sphérique (54) située du côté de la face interne (14b) et raccordée à la précédente, lesdites portions de surface cylindrique et sphérique ayant un diamètre sensiblement égal au diamètre de la portion de surface sphérique (62) de la première extrémité (61) de tube.

5. Turboréacteur selon l'une quelconque des revendications 1 à 4, **caractérisé par le fait que** le tube (60) est réalisé dans un matériau ayant sensiblement le même coefficient de dilatation que celui du matériau constitutif du jambage (13) et de la virole externe (14) de carter.

6. Turboréacteur selon la revendication 5, **caractérisé par le fait que** le tube (60), le jambage (13) et la virole externe (14) de carter sont réalisés dans le même matériau.

7. Turboréacteur selon l'une quelconque des revendications 1 à 6, **caractérisé par le fait que** les surfaces des liaisons rotulantes sont traitées avec un produit protégeant les éléments en contact et améliorant les glissements relatifs.

8. Turboréacteur selon la revendication 7, **caractérisé par le fait que** le produit est un vernis céramique au graphite.

## Claims

1. A jet engine comprising, from upstream to downstream (the upstream and downstream directions being defined by the direction of circulation of the primary flow), a high-pressure compressor (1), a diffuser grating (10) and a combustion chamber, said high-pressure compressor comprising an external shell (6) which radially delimits the duct for said primary flow and is connected to an annular structure (7) extending radially outward, said diffuser grating comprising in the axial continuation of said external compressor shell (6) an external casing (12) connected to a rearwardly oriented conical strut (13) delimiting, upstream, the end of said combustion chamber, said strut itself being connected to an external casing shell (14) which extends in the upstream direction and is fastened to said annular structure (7) by fastening means, said strut, said external casing shell and said annular structure defining a cavity (20) around said diffuser grating (10), air bleed orifices (22) being made in said strut (13) in order to bring the end of the combustion chamber into communication with said cavity (20), said external casing shell being equipped with air bleed vents (23),
wherein a tube (60) is provided between the orifice (22) in the strut (13) and the outlet vent (23), a first end (61) of which tube is mounted in said outlet vent (23) by means of a swivel connection which is free to rotate and prevented from translational movement, and a second end (63) of which tube is mounted in said orifice (22) by means of a swivel connection which is free to rotate and free to move translationally.

2. The jet engine as claimed in claim 1, wherein the first and second ends of the tube each comprise a spherical surface portion (62, 64) at their periphery.

3. The jet engine as claimed in claim 2, wherein the orifice (22) in the strut (13) is formed by a cylindrical bore (51) whose diameter is substantially equal to the diameter of the spherical surface portion (64) of the second tube end (63).

4. The jet engine as claimed in claim 1, wherein the outlet vent comprises an orifice (23) made in the wall of the external casing shell (14), said orifice being delimited by a cylindrical portion (53) situated toward the external face (14a) of said shell and by a spherical surface portion (54) situated toward the internal face (14b) and connected to the preceding portion, said cylindrical and spherical surface portions having a diameter which is substantially equal to the diameter of the spherical surface portion (62) of the first tube end (61).

5. The jet engine as claimed in claim 1, wherein the tube (60) is made of a material having substantially the same coefficient of expansion as the material constituting the strut (13) and the external casing shell (14).

6. The jet engine as claimed in claim 5, wherein the tube (60), the strut (13) and the external casing shell (14) are made of the same material.

7. The jet engine as claimed in claim 1, wherein the surfaces of the swivel connections are treated with a product which protects the elements in contact and improves the relative sliding movements.

8. The jet engine as claimed in claim 7, wherein the product is a graphite-containing ceramic varnish.

## Patentansprüche

1. Turbotriebwerk, das von vorne nach hinten betrachtet, wobei vorne und hinten in der Strömungsrichtung des Primärstroms gesehen definiert sind, einen Hochdruck-Kompressor (1), ein Diffusorgitter (10) und eine Brennkammer aufweist, wobei dieser Hochdruck-Kompressor einen Außenring (6) umfasst, der in radialer Richtung die Strömungsbahn des genannten Primärstroms umgrenzt und an einen ringförmigen Aufbau (7) angeschlossen ist, der sich radial nach außen erstreckt, wobei dieses Diffusorgitter in der axialen Verlängerung dieses Kompressor-Außenrings (6) ein Außengehäuse (12) aufweist, das mit einer konischen Säule (13) verbunden ist, die nach hinten gerichtet ist und vom den Boden der genannten Brennkammer abgrenzt, wobei diese Säule ihrerseits mit einem Gehäuseaußenring (14) verbunden ist, der sich nach vorn erstreckt und durch Befestigungsmittel an dem ringförmigen Aufbau (7) befestigt ist, wobei diese Säule, dieser Gehäuseaußenring und dieser ringförmige Aufbau einen Hohlraum (20) um das Diffusorgitter (10) herum umgrenzen, wobei in dieser Säule (13) Öffnungen (22) zur Luftentnahme ausgeführt sind, um den Kammerboden mit diesem Hohlraum (20) in Verbindung zu setzen, und wobei dieser Gehäuseaußenring mit Luftentnahmeöffnungen (23) ausgestattet ist,
**dadurch gekennzeichnet,**
**dass** zwischen der Öffnung (22) der Säule (13) und der Auslassöffnung (23) ein Rohr (60) vorgesehen ist, dessen erstes Ende (61) in dieser Auslassöffnug (23) durch eine frei drehbare und in Vorschubrichtung festgestellte Kugelgelenkverbindung angebracht ist und dessen zweites Ende (63) in der Öffnung (22) durch eine drehfreie und vorschubfreie Kugelgelenkverbindung angebracht ist.

2. Turbotriebwerk nach Anspruch 1,
**dadurch gekennzeichnet,**
**dass** das erste und das zweite Ende des Rohrs jeweils an ihrer Umfangslinie einen Abschnitt mit kugelförmiger Oberfläche (62, 64) aufweisen.

3. Turbotriebwerk nach Anspruch 2,
**dadurch gekennzeichnet,**
**dass** die Öffnung (22) der Säule (13) von einer zylindrischen Bohrung (51) gebildet wird, deren Durchmesser im Wesentlichen gleich dem Durchmesser des Abschnitts mit kugelförmiger Oberfläche (64) des zweiten Rohrendes (63) ist.

4. Turbotriebwerk nach einem der Ansprüche 1 oder 2,
**dadurch gekennzeichnet,**
**dass** die Auslassöffnung als eine Öffnung (23) in der Wand des Gehäuseaußenrings (14) ausgeführt ist, wobei diese Öffnung von einem zylindrischen Abschnitt (53), der sich auf der Seite der Außenseite (14a) dieses Rings befindet, und von einem Abschnitt mit kugelförmiger Oberfläche (54), der sich auf der Seite der Innenseite (14b) befindet und mit dem vorherigen verbunden ist, abgegrenzt wird, wobei diese Abschnitte mit zylindrischer bzw. mit kugelförmiger Oberfläche einen Durchmesser aufweisen, der im Wesentlichen gleich dem Durchmesser des Abschnitts mit kugelförmiger Oberfläche (62) des ersten Rohrendes (61) ist.

5. Turbotriebwerk nach einem der Ansprüche 1 bis 4,
**dadurch gekennzeichnet,**
**dass** das Rohr (60) aus einem Werkstoff mit im Wesentlichen dem gleichen Wärmedehnungskoeffizienten wie der des Werkstoffs, aus dem die Säule (13) und der Gehäuseaußenring (14) besteht, gebildet ist.

6. Turbotriebwerk nach Anspruch 5,
**dadurch gekennzeichnet,**
**dass** das Rohr (60), die Säule (13) und der Gehäuseaußenring (14) aus dem gleichen Werkstoff hergestellt sind.

7. Turbotriebwerk nach einem der Ansprüche 1 bis 6,
**dadurch gekennzeichnet,**
**dass** die Oberflächen der Kugelgelenkverbindungen mit einem Produkt behandelt sind, das die in Kontakt befindlichen Elemente schützt und das Gleiten zwischen diesen verbessert.

8. Turbotriebwerk nach Anspruch 7,
**dadurch gekennzeichnet,**
**dass** das Produkt ein Keramiklack oder Graphitlack ist.
